# EUROPÄISCHE PATENTSCHRIFT

(11) **EP 3 981 574 B1**
(45) Veröffentlichungstag und Bekanntmachung des Hinweises auf die Patenterteilung: **25.12.2024**
(21) Anmeldenummer: 20201131.8
(22) Anmeldetag: 09.10.2020
(51) Int. Cl.: B29C 51/02, B29C 51/14, B29C 51/26

(54) **ANORDNUNG ZUM ZUFÜHREN EINES HALBZEUGS ZU EINER THERMOFORMMASCHINE, ANORDNUNG ZUM THERMOFORMEN, SOWIE VERFAHREN**
ASSEMBLY FOR FEEDING A SEMI-FINISHED PRODUCT TO A THERMOFORMING MACHINE, ASSEMBLY FOR THERMOFORMING, AND METHOD
AGENCEMENT D'ALIMENTATION EN UN DEMI-PRODUIT D'UNE MACHINE DE THERMOFORMAGE, AGENCEMENT DE THERMOFORMAGE AINSI QUE PROCÉDÉ

(43) Veröffentlichungstag der Anmeldung: 13.04.2022
(73) Patentinhaber: Geiss AG, 96145 Sesslach (DE)
(72) Erfinder: WIERCINSKI, Miroslaw, 96242 Sonnefeld (DE)
(74) Vertreter: Isarpatent

(56) Entgegenhaltungen:
- EP-A1- 1 182 022
- WO-A2-2004/091881
- GB-A- 2 175 868
- JP-A- S61 115 632

## Beschreibung

### GEBIET DER ERFINDUNG

Die vorliegende Erfindung bezieht sich auf eine Anordnung zum Zuführen eines Halbzeugs als ein Ausgangsmaterial für ein Thermoformen zu einer Thermoformmaschine. Ferner bezieht sich die Erfindung auf eine Anordnung zum Thermoformen mit einer derartigen Anordnung zum Zuführen des Halbzeugs, sowie auf ein Verfahren zum Zuführen eines Halbzeugs als Ausgangsmaterial für ein Thermoformen zu einer Thermoformmaschine.

### TECHNISCHER HINTERGRUND

Thermoformmaschine ermöglichen es, aus einem insbesondere flächigen Ausgangsmaterial, welches zum Beispiel in Gestalt von Kunststofffolien oder Kunststoffplatten bereitgestellt wird, mit Hilfe der Einwirkung von Wärme Formteile herzustellen. Dies kann beispielsweise in der Weise erfolgen, dass das Ausgangsmaterial, zum Beispiel ein thermoplastischer Kunststoff, zunächst mittels einer Heizeinrichtung beheizt und somit erwärmt, und anschließend unter Zuhilfenahme eines Formwerkzeugs in die gewünschte Form gebracht wird. Bei dem Ausgangsmaterial handelt es sich hierbei somit jeweils um ein Halbzeug, welches mittels der Thermoformmaschine weiterverarbeitet wird.

Die Zuführung des Halbzeugs zu der Thermoformmaschine geschieht bei einer vollautomatischen Maschine in herkömmlicher Weise entweder ausgehend von einer Rolle oder ausgehend von Plattenzuschnitten.

Beispielsweise ist bei einer herkömmlichen Anordnung ein Beschickungsautomat vorgesehen, der auf einem in der Höhe verfahrbaren Tisch einen Plattenstapel, also einen Stapel geeigneter plattenförmiger Materialstücke, aufnehmen kann. Dieser Plattenstapel wird in den Beschickungsautomaten eingelegt. Im Betrieb kann der Tisch taktweise nach oben fahren, wobei ein Beschickungswagen an seiner Unterseite die oberste Platte von diesem Stapel entnimmt und in die Thermoformmaschine hineintransportiert. Anschließend fährt der Beschickungswagen wieder aus der Thermoformmaschine heraus, um die darauffolgende Platte vom Stapel zu holen. Beim erneuten Hineinfahren in die Thermoformmaschine kann der Beschickungswagen dann die nächste Platte des Ausgangsmaterials für den folgenden Formvorgang von seiner Unterseite in der Thermoformmaschine ablegen, während zugleich das Formteil aus dem soeben beendeten Formungsschritt auf den Beschickungswagen fällt und beim Herausfahren des Beschickungswagens aus der Maschine heraustransportiert wird. Ausgehend von einem Stapel von Platten können mit dieser Vorgehensweise Formteile sowohl positiv, d. h. von der Einlegeebene nach oben, als auch negativ, also von der Einlegeebene nach unten, hergestellt werden.

Im Falle der Rollenware ist die Materialdicke zumeist beschränkt, jedoch ist Rollenware im Allgemeinen preisgünstiger als Plattenware.

Bei einem typischen so genannten Rollenautomaten wird gemäß einer herkömmlichen Bauweise eine Materialbahn, etwa ein Kunststoffmaterial, von einer Rolle mittels einer Nadelkette in eine Thermoformmaschine gezogen. Nach dem Verformen wird das Rollenmaterial weitertransportiert, wodurch mehrere Formteile nacheinander auf der Rollenware entstehen. Diese Formteile werden erst am Ende des Transportvorgangs vereinzelt. Mit einer derartigen Vorgehensweise kann die preisgünstigere Rollenware verwendet werden.

Es hat sich jedoch herausgestellt, dass mit einer derartigen Vorgehensweise so genannte negativ geformte Formteile entweder in automatischer Weise nicht hergestellt werden können, oder dass dies einen erheblichen maschinellen Zusatzaufwand erfordert. Dennoch gelingt es mit den herkömmlichen Vorgehensweisen auch im letztgenannten Fall nicht, bei Verwendung von Rollenware die Ziehtiefe der Thermoformmaschine auszunutzen.

Zudem sind bereits Maschinen vorgeschlagen worden, bei denen Rollenware während des Transportes vor oder in der Nadelkette abgeschnitten und dann in dieser Nadelkette als Einzelplatte gehandhabt wird. Die Einschränkungen des herkömmlichen Rollenprinzips, wie es vorstehend beschrieben wurde, werden auf diese Weise allerdings nicht überwunden. Darüber hinaus können bei Nutzung einer Nadelkette durch das Einstechen in das transportierte Material Materialpartikel oder -splitter entstehen, die in vielen Fällen störend sein können und die Herstellung von Formteilen hoher Qualität, insbesondere hoher Oberflächenqualität, zumindest erschweren oder aufwändiger machen.

Darüber hinaus können vorab zu einem Stapel aufgestapelte Plattenzuschnitte eines Kunststoffmaterials aufgrund elektrostatischer Aufladung Schmutzpartikel oder Staub anziehen, was wiederum bei der Herstellung besonders hochwertiger Formteile unerwünscht sein kann.

Das Dokument WO 2004/091881 A2 offenbart eine Anordnung zum Zuführen eines Halbzeugs als Ausgangsmaterial für ein Thermoformen zu einer Thermoformmaschine, wobei die Anordnung eine Ablageeinrichtung, auf der Zuschnitte des Ausgangsmaterials jeweils bereitstellbar sind, und eine Beschickungsvorrichtung, aufweisend eine Tischeinrichtung und eine bewegbare Beschickungseinheit, aufweist; wobei die Beschickungseinheit einen ersten Abschnitt und einen zweiten Abschnitt aufweist und der erste und zweite Abschnitt jeweils für ein Aufnehmen eines der Zuschnitte an dem Abschnitt eingerichtet sind, und wobei auf der Tischeinrichtung mindestens einer der Zuschnitte ablegbar ist; wobei der erste Abschnitt zum Aufnehmen eines der Zuschnitte von der Tischeinrichtung und der zweite Abschnitt zum Aufnehmen eines anderen der Zuschnitte von dem Offen positionierbar sind und danach der erste Abschnitt zum Ablegen des einen von der Tischeinrichtung aufgenommenen Zuschnitts im Offen und der zweite Abschnitt zum Ablegen des anderen von dem Offen aufgenommenen Zuschnitts in einem Arbeitsbereich der Thermoformmaschine positionierbar sind. Verfahrensanspruch 15: Das Dokument WO 2004/091881 A2 offenbart dazu ein Verfahren zum Zuführen eines Halbzeugs als Ausgangsmaterial für ein Thermoformen zu einer Thermoformmaschine, umfassend: Bereitstellen eines Zuschnitts des Ausgangsmaterials auf einer Ablageeinrichtung; Aufnehmen des auf der Tischeinrichtung bereitgestellten Zuschnitts von dieser durch einen ersten Abschnitt einer bewegbaren Beschickungseinheit einer Beschickungsvorrichtung; Bewegen der Beschickungseinheit in einer ersten Richtung; Ablegen des an dem ersten Abschnitt von der Tischeinrichtung aufgenommenen Zuschnitts im Offen; Aufnehmen des im Offen abgelegten Zuschnitts von dem Offen durch einen zweiten Abschnitt der Beschickungseinheit; erneutes Bewegen der Beschickungseinheit in der ersten Richtung; Ablegen des an dem zweiten Abschnitt von dem Offen aufgenommenen Zuschnitts in einem Arbeitsbereich der Thermoformmaschine, Bewegen der Beschickungseinheit in einer zweiten Richtung.

### ZUSAMMENFASSUNG DER ERFINDUNG

Vor diesem Hintergrund liegt der Erfindung die Aufgabe zugrunde, das Zuführen eines Halbzeugs als Ausgangsmaterial zu einer Thermoformmaschine weiter zu verbessern und hierbei zumindest einige der genannten Nachteile herkömmlicher Vorgehensweisen zu überwinden.

Erfindungsgemäß wird diese Aufgabe durch eine Anordnung mit den Merkmalen des Anspruchs 1 und/oder durch eine Anordnung mit den Merkmalen des Anspruchs 14 und/oder durch ein Verfahren mit den Merkmalen des Anspruchs 15 gelöst.

Es wird eine Anordnung zum Zuführen eines Halbzeugs als Ausgangsmaterial für einmoformen zu einer Thermoformmaschine vorgeschlagen, wobei die Anordnung eine Ablageeinrichtung aufweist, auf der Zuschnitte des Ausgangsmaterials jeweils bereitstellbar sind. Ferner weist die Anordnung eine Beschickungsvorrichtung auf, welche eine Tischeinrichtung und eine bewegbare Beschickungseinheit aufweist. Die Beschickungseinheit weist einen ersten Abschnitt und einen zweiten Abschnitt auf, wobei der erste und zweite Abschnitt jeweils für ein Aufnehmen eines der Zuschnitte an dem Abschnitt eingerichtet sind. Auf der Tischeinrichtung ist mindestens einer der Zuschnitte ablegbar. Hierbei sind der erste Abschnitt zum Aufnehmen eines der Zuschnitte von der Ablageeinrichtung und der zweite Abschnitt zum Aufnehmen eines anderen der Zuschnitte von der Tischeinrichtung positionierbar. Danach sind der erste Abschnitt zum Ablegen des einen von der Ablageeinrichtung aufgenommenen Zuschnitts auf der Tischeinrichtung und der zweite Abschnitt zum Ablegen des anderen von der Tischeinrichtung aufgenommenen Zuschnitts in einem Arbeitsbereich der Thermoformmaschine positionierbar.

Vorgeschlagen wird ferner eine Anordnung zum Thermoformen mit einer Thermoformmaschine sowie mit einer derartigen Anordnung zum Zuführen eines Halbzeugs, um der Thermoformmaschine das Halbzeug als Ausgangsmaterial für das Thermoformen zuzuführen.

Weiterhin wird ein Verfahren zum Zuführen eines Halbzeugs als Ausgangsmaterial für ein Thermoformen zu einer Thermoformmaschine vorgeschlagen, wobei das Verfahren umfasst:
- Bereitstellen eines Zuschnitts des Ausgangsmaterials auf einer Ablageeinrichtung;
- Aufnehmen des auf der Ablageeinrichtung bereitgestellten Zuschnitts von dieser durch einen ersten Abschnitt einer bewegbaren Beschickungseinheit einer Beschickungsvorrichtung;
- Bewegen der Beschickungseinheit in einer ersten Richtung;
- Ablegen des an dem ersten Abschnitt von der Ablageeinrichtung aufgenommenen Zuschnitts auf einer Tischeinrichtung der Beschickungsvorrichtung;
- Bewegen der Beschickungseinheit in einer zweiten Richtung;
- Aufnehmen des auf der Tischeinrichtung abgelegten Zuschnitts von der Tischeinrichtung durch einen zweiten Abschnitt der Beschickungseinheit;
- erneutes Bewegen der Beschickungseinheit in der ersten Richtung;
- Ablegen des an dem zweiten Abschnitt von der Tischeinrichtung aufgenommenen Zuschnitts in einem Arbeitsbereich der Thermoformmaschine.

Eine der Erfindung zu Grunde liegende Idee besteht darin, die Beschickungseinheit mit dem ersten und dem zweiten Abschnitt und somit mit zwei Stationen zur Aufnahme von Zuschnitten auszustatten. Durch Nutzung der bewegbaren Beschickungseinheit, die das Ablegen eines Zuschnitts im Arbeitsbereich der Thermoformmaschine ermöglicht, kann ausgehend von der Einlegeebene sowohl positiv als auch negativ ohne Einschränkung und unter Ausnutzung der Ziehtiefe der Thermoformmaschine produziert werden. Insbesondere kann ferner durch Bereitstellen der nacheinander verarbeiteten Zuschnitte jeweils auf der Ablageeinrichtung mit einer einheitlichen Verfahrensweise und unter einheitlicher Formteilhandhabung produziert werden, unabhängig davon, ob Plattenware oder Rollenware als Ausgangshalbzeug verwendet wird. Mit der Erfindung kann zudem auch die oft unerwünschte Bildung von Materialpartikeln oder -splittern, wie dies bei Nutzung einer Nadelkette vorkommen kann, vermieden werden. Darüber hinaus kann, falls erforderlich oder gewünscht, der Bereitstellung der einzelnen Zuschnitte in einigen Fällen insbesondere noch eine besondere Einzelbehandlung der Zuschnitte, etwa ein Reinigen, vorausgehen.

Das erfindungsgemäße Verfahren kann insbesondere mittels der erfindungsgemäßen Anordnung zum Zuführen durchgeführt werden.

Vorteilhafte Ausgestaltungen und Weiterbildungen ergeben sich aus den Unteransprüchen sowie aus der Beschreibung unter Bezugnahme auf die Zeichnungen.

In einer Ausgestaltung weist die Anordnung eine der Ablageeinrichtung vorgelagert angeordnete Abrolleinrichtung zum Abrollen einer Rollenware auf. Somit kann vorteilhaft ausgehend von der Rollenware produziert werden, wodurch Kostenvorteile der Rollenware genutzt werden können. Gleichzeitig können eine einheitliche Verfahrensweise und Handhabung der fertigen Formteile analog einem Thermoformen ausgehend von Plattenware erfolgen. Auch bei der Produktion ausgehend von Rollenware kann die Ziehtiefe der Thermoformmaschine vorteilhaft ausgenutzt werden.

Gemäß einer weiteren Ausgestaltung weist die Anordnung eine Trenneinrichtung, insbesondere eine Schneideinrichtung, auf, die für ein Abtrennen eines Stücks der mittels der Abrolleinrichtung bereichsweise abgerollten und insbesondere zumindest bereichsweise auf der Ablageeinrichtung abgelegten Rollenware zum Bilden der Zuschnitte des Ausgangsmaterials eingerichtet ist. Somit kann das Zuschneiden der Zuschnitte direkt vor deren Verarbeitung, beispielsweise in einer entsprechend der Arbeitstaktung der Thermoformmaschine getakteten Weise, erfolgen.

Insbesondere ist die Trenneinrichtung der Abrolleinrichtung nachgelagert angeordnet.

In einer Ausgestaltung ist die Anordnung für ein Bereitstellen der Zuschnitte des Ausgangsmaterials auf der Ablageeinrichtung jeweils als Zuschnitt einer Plattenware eingerichtet. Dies ermöglicht es, die Fertigung der Formteile ausgehend von Plattenware vorzunehmen, beispielsweise wenn die Materialstärke zu groß ist, um das Ausgangsmaterial als Rollenware bereitzustellen. Vorteilhaft kann dem Bereitstellen des Zuschnitts auf der Ablageeinrichtungen eine weitere Arbeitsstation, beispielsweise eine Reinigungsvorrichtung, vorgelagert sein. Die Plattenware wird bei dieser Ausgestaltung somit von extern, also von einer externen Quelle, herangeführt, und die Zuschnitte werden insbesondere einzeln und bevorzugt in zumindest teilweise automatisierter Weise auf der Ablageeinrichtung bereitgestellt. Zudem kann auch in Fällen, in denen das Ausgangsmaterial von seiner Materialstärke her gesehen ein Aufrollen erlauben würde, der Zuschnitt ebenfalls als vorgefertigt zugeschnittene Plattenware angeliefert werden.

Insbesondere erfolgt das Positionieren der ersten und zweiten Abschnitte mittels Bewegen der Beschickungseinheit, wobei die ersten und zweiten Abschnitte im Betrieb der Anordnung insbesondere gemeinsam miteinander bewegbar sind. Mit anderen Worten sind somit der erste und zweite Abschnitt vorzugsweise in zueinander festgelegter räumlicher Anordnung an der Beschickungseinheit vorgesehen.

In einer Weiterbildung ist vorgesehen, dass die Beschickungseinheit derart bewegbar angeordnet ist, dass in einer ersten Position der Beschickungseinheit der erste Abschnitt der Beschickungseinheit zum Aufnehmen des einen der Zuschnitte von der Ablageeinrichtung und gleichzeitig der zweite Abschnitt der Beschickungseinheit zum Aufnehmen des anderen der Zuschnitte von der Tischeinrichtung positioniert sind, und/oder dass die Beschickungseinheit derart bewegbar angeordnet ist, dass in einer zweiten Position der Beschickungseinheit der erste Abschnitt der Beschickungseinheit zum Ablegen des einen Zuschnitts auf der Tischeinrichtung und gleichzeitig der zweite Abschnitt der Beschickungseinheit zum Ablegen des anderen Zuschnitts in dem Arbeitsbereich der Thermoformmaschine positioniert sind. Somit kann eine effiziente, getaktete Arbeitsweise erreicht werden, wobei beispielsweise in einem ersten Takt das Aufnehmen von der Ablageeinrichtung und zeitgleich von der Tischeinrichtung erfolgt, während in einem folgenden Takt, nach Bewegen der Beschickungseinheit, das Ablegen auf der Tischeinrichtung bzw. im Arbeitsbereich der Thermoformmaschine wiederum zeitgleich erfolgen.

In einer Ausgestaltung ist die Beschickungeinheit als ein bewegbarer Beschickungswagen ausgebildet. Eine Bewegung der Beschickungseinheit kann somit in einfacher und zweckmäßiger Weise erreicht werden.

In einer Ausgestaltung ist die bewegbare Beschickungseinheit oberhalb der Tischeinrichtung und der Ablageeinrichtung verfahrbar. Vorzugsweise ist die bewegbare Beschickungseinheit entlang einer im Wesentlichen horizontalen Richtung verfahrbar. Auf diese Weise gelingt es vorteilhaft, die Zuschnitte an der Beschickungseinheit von unten her an deren ersten und zweitem Abschnitt aufzunehmen, wobei die Zuschnitte auf der Tischeinrichtung und der Ablageeinrichtung jeweils insbesondere im Wesentlichen horizontal, etwa auf einer im Wesentlichen horizontalen Fläche, ablegbar bzw. bereitstellbar sind.

Gemäß einer Ausgestaltung sind der erste und zweite Abschnitt der Beschickungseinheit entlang einer Bewegungsrichtung der Beschickungseinheit hintereinander angeordnet. Dies erleichtert das Positionieren der Abschnitte mittels eines Bewegens der Beschickungseinheit.

Insbesondere ist vorgesehen, dass der erste Abschnitt über der Ablageeinrichtung positionierbar ist und zudem der erste und zweite Abschnitt jeweils über der Tischeinrichtung positionierbar sind.

In einer Ausgestaltung sind die Zuschnitte an dem ersten und zweiten Abschnitt der Beschickungseinheit jeweils an einer Unterseite der Beschickungseinheit aufnehmbar, wobei die Beschickungseinheit, insbesondere im Bereich der Unterseite derselben, mit Aufnahmemitteln ausgestattet ist.

Die Aufnahmemittel können in einer Ausgestaltung beispielsweise als Saugeinrichtungen ausgebildet sein.

In einer Ausgestaltung ist die Beschickungsvorrichtung derart ausgebildet und angeordnet, dass der zweite Abschnitt der bewegbaren Beschickungseinheit in den Arbeitsbereich der Thermoformmaschine hinein verlagerbar ist. Dies kann zu einem zuverlässigen Ablegen des Zuschnitts in dem Arbeitsbereich in der korrekten Position beitragen. Ferner trägt dies zu einem effizienten Heraustransport eines fertiggestellten Formteils bei.

In einer Ausgestaltung ist die Beschickungsvorrichtung derart ausgebildet, dass auf einer Oberseite der Beschickungseinheit ein aus einem zuvor in dem Arbeitsbereich der Thermoformmaschine abgelegten Zuschnitt mittels Thermoformen hergestelltes und danach entformtes Formteil ablegbar ist, insbesondere in jener Position der Beschickungseinheit, in der die Beschickungseinheit für das Ablegen des anderen Zuschnitts in dem Arbeitsbereich der Thermoformmaschine positioniert ist. Die entformten Formteile können somit einzeln nacheinander aus dem Arbeitsbereich heraustransportiert werden, ohne dass der Transport und das Ablegen des nachfolgenden Zuschnitts hierdurch erschwert würde. Beispielsweise kann das fertige Formteil von einem Spannrahmen der Thermoformmaschine angehoben werden, so dass die Beschickungseinheit zwischen das entformte Formteil und eine Einlege- oder Einspannebene für den nächsten Zuschnitt hinein bewegt werden kann. Es wird somit möglich, Formteile bezüglich dieser Ebene sowohl positiv als auch negativ, also nach oben oder nach unten, zu formen, ohne dass die Ziehtiefe durch den Transportvorgang eingeschränkt würde.

In einer Ausgestaltung kann die Ablageeinrichtung als ein Tisch ausgebildet sein.

In einer bevorzugten Ausgestaltung ist die Ablageeinrichtung mit einer Transporteinrichtung ausgebildet, beispielsweise mit einer bandartigen Transporteinrichtung. Dies kann die Handhabung des Halbzeugs, insbesondere bei Bereitstellung als Rollenware, verbessern. Diese Ausgestaltung kann zu einer korrekten Positionierung und Bereitstellung des Zuschnitts, beispielsweise ohne unerwünschte Falten oder ähnliches, beitragen.

Insbesondere stellt die Transporteinrichtung der Ablageeinrichtung eine bewegbare, vorzugsweise im Wesentlichen in horizontaler Richtung bewegbare, Ablageoberfläche bereit, die sich bevorzugt im Wesentlichen horizontal erstreckt.

In einer Ausgestaltung ist die Tischeinrichtung der Beschickungsvorrichtung mit einem bewegbaren Tisch ausgebildet. Der Tisch kann insbesondere quer zu einer Bewegungsrichtung der Beschickungseinheit bewegbar sein. Insbesondere ist der Tisch im Wesentlichen entlang einer vertikalen Richtung verfahrbar. Dies macht es möglich, eine Fläche des Tisches, auf der der Zuschnitt ablegbar ist, in der Höhe justieren zu können. Zudem kann mit dieser Ausgestaltung die Anordnung gemäß einer weiteren Betriebsart betrieben werden, bei der auf dem Tisch ein Stapel bereits vorbereiteter, gestapelter Zuschnitte eines Ausgangsmaterials für das Thermoformen angeordnet wird. Diese Zuschnitte können mittels der Beschickungseinheit, insbesondere mittels des zweiten Abschnitts derselben, nacheinander einzeln vom Stapel abgenommen und in den Arbeitsbereich der Thermoformmaschine hinein transportiert werden. Bei dieser beispielhaften Betriebsart wird der erste Abschnitt somit nicht verwendet. Der Stapel kann entweder direkt auf dem Tisch abgelegt sein, oder auf einer Palette, die wiederum auf dem Tisch angeordnet ist. Diese Ausgestaltung ermöglicht es somit, die Anordnung in mindestens zwei unterschiedlichen Betriebsarten zu betreiben, zum einen unter externer Bereitstellung eines Zuschnitts beispielsweise ausgehend von einer Rollenware während des Produktionsvorgangs, oder von extern als Einzelzuschnitte, oder alternativ unter Bereitstellung eines Stapels bereits fertiger Zuschnitte, etwa von Plattenware. Die Anordnung kann somit in sehr flexibler Weise betrieben werden.

Der Tisch könnte beispielsweise in einigen Ausgestaltungen taktweise verfahrbar sein. Dies kann für eine Betriebsart, in der das Thermoformen ausgehend von einem Zuschnittstapel erfolgt, nützlich sein.

Bei anderen Ausgestaltungen jedoch kann die Tischeinrichtung einen fest angeordneten Tisch aufweisen. Hierdurch kann der Aufbau der Beschickungsvorrichtung vereinfacht werden, etwa für Anwendungsfälle, in denen der Einsatz von Zuschnittstapeln eines Ausgangsmaterials nicht vorgesehen ist.

Insbesondere ist die Ablageeinrichtung der Beschickungsvorrichtung vorgelagert angeordnet. Beispielsweise kann die Ablageeinrichtung hierbei außerhalb der Beschickungsvorrichtung angeordnet sein.

Weiterhin ist in einer bevorzugten Ausgestaltung die Beschickungsvorrichtung der Thermoformmaschine vorgelagert und/oder räumlich neben der Thermoformmaschine angeordnet.

Mittels der Thermoformmaschine kann das Ausgangsmaterial in dem Arbeitsbereich einem Thermoformen unterzogen werden, um Formteile herzustellen. Als Ausgangsmaterial wird der Thermoformmaschine als das Halbzeug beispielsweise ein Folien- oder Plattenmaterial, insbesondere ein Kunststoff-Folienmaterial oder ein Kunststoff-Plattenmaterial, zugeführt.

Die Thermoformmaschine ist insbesondere als eine Closed-Chamber-Thermoformmaschine ausgebildet, welche ein im Betrieb geschlossenes und abgedichtetes Maschinengehäuse aufweist. Die Erfindung kann jedoch im Zusammenhang mit Thermoformmaschinen anderer Art ebenfalls Anwendung finden.

In einer Ausgestaltung der Anordnung zum Thermoformen ist die Beschickungsvorrichtung zwischen der Thermoformmaschine und der Ablageeinrichtung angeordnet.

Insbesondere verläuft bei dem Verfahren zum Zuführen eines Halbzeugs zu der Thermoformmaschine die zweite Richtung, in der die Beschickungseinheit bewegt wird, parallel und entgegengesetzt zu der ersten Richtung.

In einer Ausgestaltung des Verfahrens wird während des Aufnehmens des auf der Tischeinrichtung abgelegten Zuschnitts durch den zweiten Abschnitt der Beschickungseinheit, insbesondere gleichzeitig, ein weiterer auf der Ablageeinrichtung bereitgestellter Zuschnitt durch den ersten Abschnitt der Beschickungseinheit aufgenommen. Vorzugsweise wird während des Ablegens des an dem zweiten Abschnitt aufgenommenen Zuschnitts in dem Arbeitsbereich der Thermoformmaschine, insbesondere gleichzeitig, der weitere an dem ersten Abschnitt aufgenommene Zuschnitt auf der Tischeinrichtung abgelegt. Wiederum kann eine effiziente, getaktete Arbeitsweise erreicht werden.

In einer Ausgestaltung wird zum Bereitstellen des Zuschnitts des Ausgangsmaterials auf der Ablageeinrichtung ein Stück eines als Rollenware bereitgestellten Ausgangsmaterials abgerollt, insbesondere auf der Ablageeinrichtung zumindest abschnittsweise abgelegt, und zum Bilden des Zuschnitts von der verbleibenden Rollenware abgetrennt.

Bei einer alternativen Ausgestaltung wird der Zuschnitt des Ausgangsmaterials auf der Ablageeinrichtung als Zuschnitt einer Plattenware bereitgestellt.

Die Vorteile der Bereitstellung des Ausgangsmaterials als Rollen- oder als Plattenware wurden weiter oben jeweils bereits erläutert.

Die obigen Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmalen der Erfindung.

Insbesondere wird dabei der Fachmann auch Einzelaspekte als Verbesserungen oder Ergänzungen zu der jeweiligen Grundform der Erfindung hinzufügen.

Die vorstehend beschriebenen Ausgestaltungen und Weiterbildungen können in analoger Weise jeweils auf die Anordnung zum Zuführen eines Halbzeugs zu einer Thermoformmaschine, auf die Anordnung zum Thermoformen, und auf das Verfahren zum Zuführen eines Halbzeugs Anwendung finden.

### INHALTSANGABE DER ZEICHNUNGEN

Die Erfindung wird nachfolgend anhand der in den schematischen Figuren angegebenen Ausführungsbeispiele näher erläutert. Hierbei zeigen:
- Fig. 1: eine Anordnung gemäß einem Ausführungsbeispiel, in einer schematischen Seitenansicht, in einem ersten Takt zu Beginn der Produktion von Formteilen;
- Fig. 2: die Anordnung der Fig. 1 in einem auf den ersten Takt folgenden zweiten Takt;
- Fig. 3: die Anordnung der Fig. 1 in einem auf den zweiten Takt folgenden dritten Takt;
- Fig. 4: die Anordnung der Fig. 1 in einem auf den dritten Takt folgenden vierten Takt;
- Fig. 5: die Anordnung der Fig. 1 in einem auf den vierten Takt folgenden fünften Takt;
- Fig. 6: die Anordnung der Fig. 1 in einem auf den fünften Takt folgenden sechsten Takt;
- Fig. 7: eine Anordnung gemäß Fig. 1 beim Betrieb in einer alternativen Betriebsart; und
- Fig. 8: eine Anordnung gemäß einem weiteren Ausführungsbeispiel.

Die beiliegenden Zeichnungen sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander gezeigt.

In den Figuren der Zeichnungen sind gleiche, funktionsgleiche und gleich wirkende Elemente, Merkmale und Komponenten - sofern nichts anderes ausgeführt ist - jeweils mit denselben Bezugszeichen versehen.

### BESCHREIBUNG VON AUSFÜHRUNGSBEISPIELEN

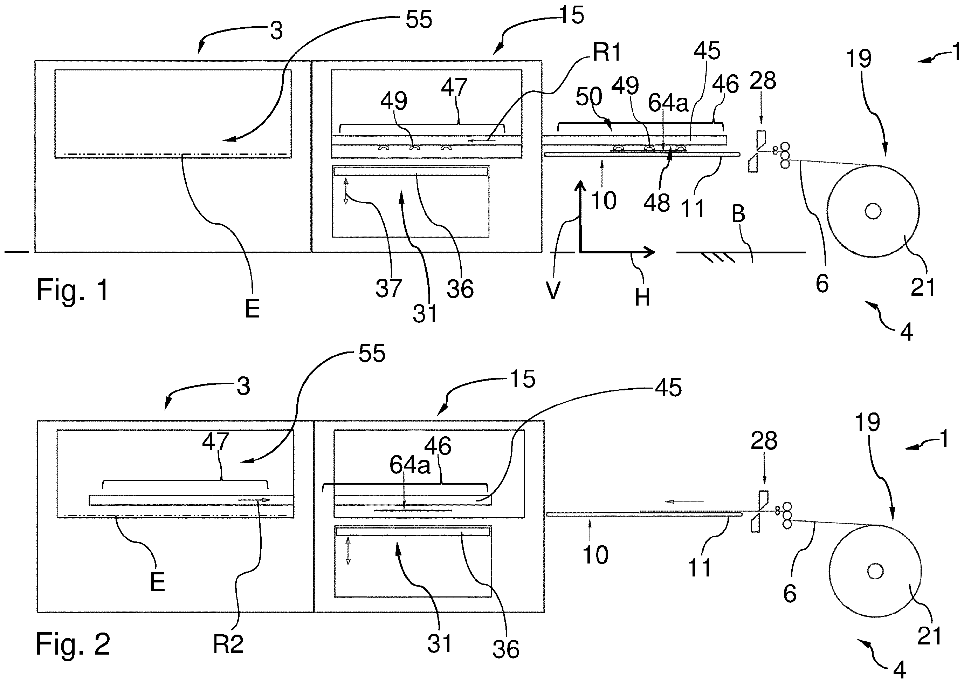

Fig. 1 zeigt eine Anordnung 1 zum Thermoformen, mit einer Thermoformmaschine 3 sowie einer der Thermoformmaschine 3 zugeordneten Anordnung 4 zum Zuführen eines Halbzeugs als Ausgangsmaterial 6 für das Thermoformen zu der Thermoformmaschine 3. In Fig. 1 kommt als das Halbzeug, welches als Ausgangsmaterial 6 zugeführt, eine Rollenware zum Einsatz.

Die Anordnung 4 umfasst eine Ablageeinrichtung 10 sowie eine Beschickungsvorrichtung 15. Ferner umfasst die Anordnung 4 in Fig. 1 eine Abrolleinrichtung 19 zum Abrollen der Rollenware von einer Rolle 21, und eine Trenneinrichtung 28 zum Abtrennen von Stücken der Rollenware.

Die Thermoformmaschine 3, die Beschickungsvorrichtung 15, und die Ablageeinrichtung 10 sind in Fig. 1 in dieser Reihenfolge entlang einer horizontalen Richtung H nebeneinander angeordnet und auf einem im Wesentlichen horizontalen Boden B aufgestellt, wobei ein Traggestell oder ähnliches für die Ablageeinrichtung 10 in Fig. 1 der besseren Übersicht halber nicht dargestellt ist. Die Beschickungsvorrichtung 15 ist somit in Fig. 1 neben der Thermoformmaschine 3 an diese angrenzend angeordnet, wobei die Ablageeinrichtung 10 außerhalb der Beschickungsvorrichtung 15 und dieser vorgelagert und benachbart neben dieser vorgesehen ist.

Der Ablageeinrichtung 10 in der horizontalen Richtung H vorgelagert sind die Trenneinrichtung 28 und die Abrolleinrichtung 19 vorgesehen. Die Trenneinrichtung 28 ist somit der Abrolleinrichtung 19 entlang des Förderpfades des Ausgangsmaterials 6 nachgelagert zwischen der Abrolleinrichtung 19 und der Ablageeinrichtung 10 angeordnet. Für die Trenneinrichtung 28 und die Abrolleinrichtung 19 sind der besseren Übersicht halber Gehäuse oder Traggestelle ebenfalls jeweils nicht dargestellt.

Auf der Rolle 21 wird das Halbzeug als Rollenware und Ausgangsmaterial 6 für das Thermoformen in der Thermoformmaschine 3 geliefert. Bei dem Ausgangsmaterial 6 handelt es sich insbesondere um eine Kunststofffolie, beispielsweise gebildet mit einem thermoplastischen Kunststoff. Gegenüber Plattenware ist Rollenware oftmals günstiger im Preis.

Die Beschickungsvorrichtung 15 weist eine Tischeinrichtung 31 auf, welche mit einem bewegbaren, im Wesentlichen entlang einer vertikalen Richtung V verfahrbaren Tisch 36 ausgebildet ist. Die Verfahrbarkeit des Tisches 36 ist in Fig. 1 schematisch mittels eines Pfeils 37 angedeutet.

Ferner weist die Beschickungsvorrichtung 15 eine bewegbare Beschickungseinheit 45 auf, die als ein bewegbarer Beschickungswagen ausgebildet und oberhalb der Tischeinrichtung 36 und der Ablageeinrichtung 10 im Wesentlichen entlang der horizontalen Richtung H verfahrbar ist. Die Beschickungseinheit 45 weist einen ersten Abschnitt 46 und einen zweiten Abschnitt 47 auf, welche entlang der horizontalen Richtung H und somit entlang einer Bewegungsrichtung der Beschickungseinheit 45 hintereinander und in fester räumlicher Beziehung zueinander an der Beschickungseinheit 45 angeordnet sind.

Im Bereich einer Unterseite 48 der Beschickungseinheit 45 ist diese innerhalb der Abschnitte 46 und 47 jeweils mit Aufnahmemitteln 49 ausgestattet, die für ein Aufnehmen von Zuschnitten 64, 64a-c des Ausgangsmaterials 6 eingerichtet sind. Beispielsweise können die Aufnahmemittel 49 jeweils als Saugeinrichtungen ausgebildet sein. Nur einige wenige der Aufnahmemittel 49 sind für jeden der Abschnitte 46, 47 in Fig. 1 schematisch angedeutet, in Fig. 2-8 sind die Aufnahmemittel 49 zur besseren Übersicht nicht gezeigt.

Bei der Thermoformmaschine 3 der Fig. 1 handelt es sich beispielhaft um eine Closed-Chamber-Thermoformmaschine. Fig. 1 zeigt einen Arbeitsbereich 55 der Thermoformmaschine 3, sowie eine Einlege- oder Einspannebene E für das Ausgangsmaterial 6, welches thermogeformt wird. Die Einlegeebene E ist in Fig. 1 schematisch doppelt-strichpunktiert eingezeichnet. Unterhalb der Einlegeebene E befindet sich bei der Thermoformmaschine 3 ein im Betrieb der Thermoformmaschine 3 geschlossenes und abgedichtetes Maschinengehäuse. Ein Formwerkzeug und ein insbesondere oberhalb der Einlegeebene E bewegbarer Spannrahmen, der insbesondere auch zum Festspannen des Ausgangsmaterials 6 etwa in der Ebene E dient, sind in Fig. 1 der besseren Übersicht halber ebenfalls nicht näher dargestellt. Ebenso ist eine Heizung zum Erwärmen des thermozuformenden Materials nicht gezeigt.

Die Funktionsweise der Anordnung 1 der Fig. 1 wird im Folgenden erläutert.

Um der Thermoformmaschine 3 das Halbzeug als Ausgangsmaterial 6 für das Thermoformen zuzuführen, wird von der Rollenware auf der Rolle 21 zunächst ein Stück mittels der Abrolleinrichtung 19 abgerollt. Während des Abrollens wird das Ausgangsmaterial 6, mithin zumindest ein Teil des abgerollten Stücks desselben, abschnittsweise auf der Ablageeinrichtung 10 abgelegt. Der Vorgang ist in Fig. 2, 4 und 6 für spätere Arbeitstakte zeichnerisch illustriert.

Die Ablageeinrichtung 10 weist eine bandartige Transporteinrichtung 11 auf, die beispielhaft als ein antreibbares Endlosband ausgebildet ist, und die im Bereich einer Oberseite der Transporteinrichtung 10 eine in der horizontalen Richtung H bewegbare, horizontale Ablageoberfläche bereitstellt. Das abgerollte Stück des Ausgangsmaterials 6 kann hierbei zuverlässig abgelegt werden, um nachfolgend als Zuschnitt der Beschickungseinheit 45 übergeben zu werden.

Ist die gewünschte Menge des Ausgangsmaterials 6 abgerollt und auf der Ablageeinrichtung 10 abgelegt, wird das abgelegte Stück mittels der Trenneinrichtung 28, die in Fig. 1 als Schneideinrichtung ausgebildet ist, vom Rest der Rollenware abgeschnitten, wodurch auf der Ablageeinrichtung 10 ein Zuschnitt 64a bereitgestellt ist, der nachfolgend in der Thermoformmaschine 3 einem Thermoformen unterzogen werden wird, um ein Formteil 66 herzustellen.

Im Takt der Fig. 1, entsprechend einem Betriebsschritt, in dem der erste Zuschnitt 64a der Thermoformmaschine 3 zugeführt wird, wird der Zuschnitt 64a mittels der Aufnahmemittel 49 an dem ersten Abschnitt 46 aufgenommen. Der erste Abschnitt 46 bildet hierbei eine Art "Verlängerung" des Beschickungswagens 45, ragt in der in Fig. 1 gezeigten Grundstellung oder ersten Position der Beschickungseinheit 45 auf der von der Thermoformmaschine 3 abgewandten Seite der Beschickungsvorrichtung 15 aus der Beschickungsvorrichtung 15 hervor und erstreckt sich horizontal über die Ablageeinrichtung 10 hinweg. Fig. 1 zeigt, dass in diesem Schritt der abgeschnittene Folienzuschnitt 64a der Rollenware an die Unterseite 48 im Bereich des ersten Abschnitts 46 und somit der "Verlängerung" der Beschickungseinheit 45 übergeben wird.

Nachdem der Zuschnitt 64a an dem ersten, über der Ablageeinrichtung 10 positionierten Abschnitt 46 aufgenommen ist, wird die Beschickungseinheit 45 in einer Richtung R1 parallel zur horizontalen Richtung H verfahren, derart, dass die Beschickungseinheit 45 aus der ersten Position, in der der erste Abschnitt 46 zum Aufnehmen des Zuschnitts 64a von der Ablageeinrichtung 10 positioniert ist, in eine zweite Position bewegt wird, in der der erste Abschnitt 46 über dem Tisch 36 der Tischeinrichtung 31 positioniert ist, um auf einer im Wesentlichen horizontalen Fläche des Tisches 36 den Zuschnitt 64a abzulegen. Fig. 2 zeigt die Beschickungseinheit 45 nach dem Verfahren in Richtung R1. In dem in Fig. 2 gezeigten zweiten Takt wird der Zuschnitt 64a des Folienmaterials in der Beschickungsvorrichtung 15 auf deren Tischvorrichtung 31 abgelegt.

Der Tisch 36 kann dafür eingerichtet sein, in einer anderen Betriebsart, die später noch näher erläutert werden soll, einen Stapel von Zuschnitten, insbesondere von Zuschnitten einer Plattenware, aufzunehmen, wobei dieser Stapel direkt oder mittels einer hierfür vorgesehenen Palette auf dem Tisch 36 angeordnet werden kann. Bei der in Fig. 1-6 gezeigten Betriebsart fehlt jedoch ein derartiger Stapel, stattdessen wird der im ersten Takt an dem ersten Abschnitt 46 aufgenommene Zuschnitt 64a im zweiten Takt der Fig. 2 auf dem Tisch 36 einzeln abgelegt, dorthin, wo bei der anderen Betriebsart der Plattenstapel geladen werden könnte.

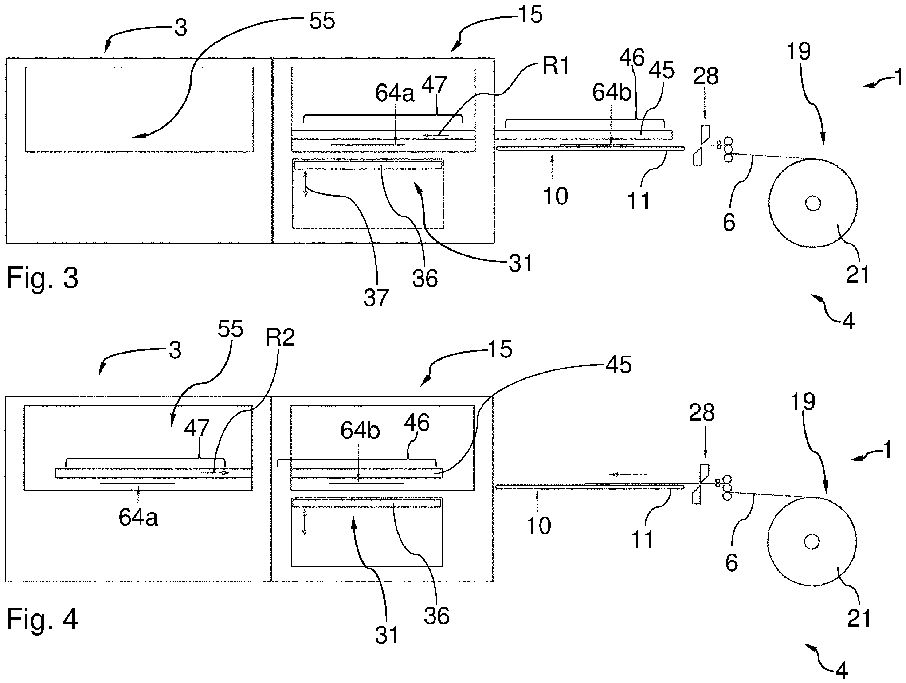

Währenddessen, siehe Fig. 2, 3, wird durch Abrollen und Zuschneiden mittels der Abrolleinrichtung 19 und der Trenneinrichtung 28 ein weiterer Zuschnitt 64b auf der Ablageeinrichtung 10 bereitgestellt. Nach Beendigung des zweiten Takts der Fig. 2 fährt die Beschickungseinheit 45 in einer zweiten Richtung R2 entgegengesetzt zur ersten Richtung R1 und im Wesentlichen parallel zur horizontalen Richtung H mit dem ersten Abschnitt 46 wieder über die Ablageeinrichtung 10.

In dem dritten Takt der Fig. 3 befindet sich die bewegbare Beschickungseinheit 45 wieder in der ersten Position, in der der erste Abschnitt 46 oberhalb der Ablageeinrichtung 10 positioniert ist. Gleichzeitig ist in der ersten Position der Beschickungseinheit 45 der zweite Abschnitt 47 über der Tischeinrichtung 31 positioniert. In dem dritten Takt der Fig. 3 kann somit durch den ersten Abschnitt 46 der weitere Zuschnitt 64b, der während des vorangehenden Taktes auf der Ablageeinrichtung 10 bevorzugt automatisiert bereitgestellt wurde, von der Ablageeinrichtung 10 übernommen werden. Gleichzeitig wird durch den zweiten Abschnitt 47 der im zweiten Takt auf dem Tisch 36 der Tischvorrichtung 31 abgelegte Zuschnitt 64a von der Tischeinrichtung 31 wieder aufgenommen. Dies geschieht analog dem Aufnehmen an dem ersten Abschnitt 46 mit Hilfe der Aufnahmemittel 49, die auch im Bereich des zweiten Abschnitts 47 vorgesehen sind und zum Beispiel als Sauger ausgebildet sein können, jedoch in Fig. 3 nicht näher illustriert sind.

Während in Fig. 3 also in der ersten Position der erste Abschnitt 46 zum Aufnehmen des Zuschnitts 64b von der Ablageeinrichtung 10 positioniert ist, ist gleichzeitig der zweite Abschnitt 47 zum Aufnehmen des anderen Zuschnitts 64a von der Tischeinrichtung 31 positioniert. In Fig. 3 wird der Zuschnitt 64b von der Ablageeinrichtung 10 an dem ersten Abschnitt 46 und der andere, zuvor auf der Tischeinrichtung 31 abgelegte Zuschnitt 64a an dem zweiten Abschnitt 47 aufgenommen.

Danach verfährt die Beschickungseinheit 45 wieder in der Richtung R1 bis in die zweite Position, in der der zweite Abschnitt 47 in den Arbeitsbereich 55 hinein verlagert ist, siehe Fig. 4. Im vierten Takt der Fig. 4 werden gleichzeitig der an dem ersten Abschnitt 46 zuvor von der Ablageeinrichtung 10 aufgenommene Zuschnitt 64b auf der Tischeinrichtung 31, insbesondere auf dem Tisch 36, und der an dem zweiten Abschnitt 47 zuvor von der Tischeinrichtung 31, insbesondere dem Tisch 36, aufgenommene Zuschnitt 64a in dem Arbeitsbereich 55 der Thermoformmaschine 3 in der Ebene E abgelegt. Während des Ablegens der an den Abschnitten 46, 47 aufgenommenen Zuschnitte 64b, 64a wird ein weiterer Zuschnitt 64c auf der Ablageeinrichtung 10 bereitgestellt, wie in Fig. 4 illustriert. Dies geschieht analog zu dem vorstehend beschriebenen Bereitstellen der Zuschnitte 64a, 64b auf der Ablageeinrichtung 10.

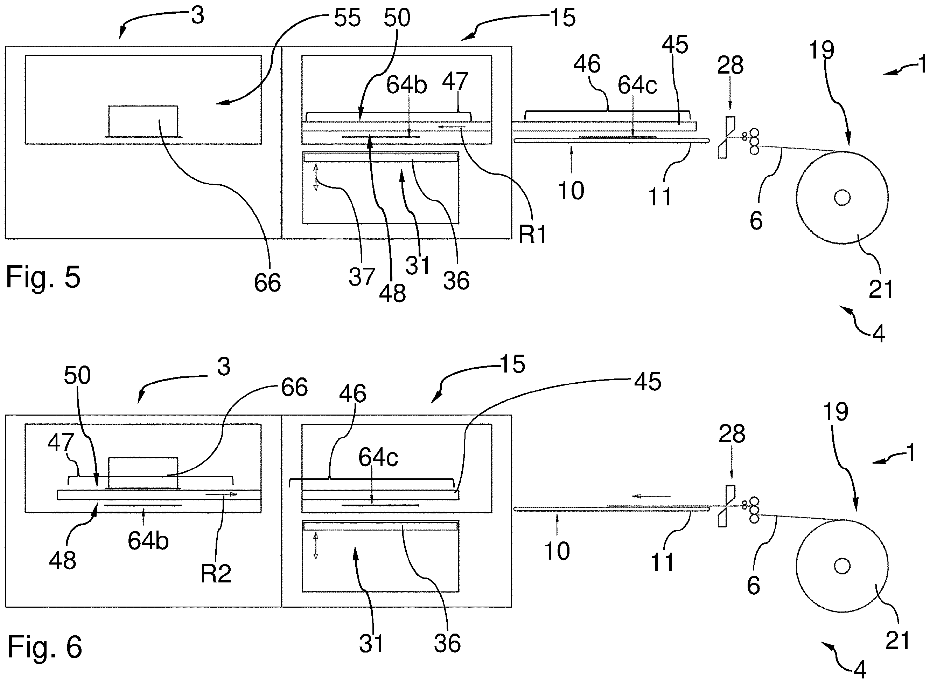

Die Beschickungsvorrichtung 15 ist derart ausgebildet, dass auf einer Oberseite 50 der Beschickungseinheit 45, mindestens in einem Teil derselben, die dem zweiten Abschnitt 47 zugeordnet ist, ein Formteil 66 abgelegt werden kann. Dies ist in Fig. 5, 6 dargestellt, welche zwei weitere Takte des Betriebs der Anordnung 1 zeigen, die auf Fig. 4 erfolgen. Die Vorgänge in Fig. 5 entsprechen den zu Fig. 3 beschriebenen, die Vorgänge in Fig. 6 den zu Fig. 4 beschriebenen, mit Ausnahme dessen, dass in dem Betriebszustand der Fig. 5 im Arbeitsbereich 55 der Thermoformmaschine 3 nun bereits ein Formteil 66 vorliegt, welches aus dem im vierten Takt im Arbeitsbereich 55 abgelegten Zuschnitt 64a durch Thermoformen hergestellt wurde. Das entformte Formteil 66 wird durch den in den Figuren nicht näher dargestellten Spannrahmen gegriffen und in der vertikalen Richtung V angehoben. Danach fährt die Beschickungseinheit 45 in Richtung R1, siehe Fig. 5, horizontal wieder mit dem zweiten Abschnitt 47 in den Arbeitsbereich 55 ein. Die Beschickungseinheit 45 trägt hierbei an ihrer Unterseite 48 wiederum in dem ersten Abschnitt 46 und dem zweiten Abschnitt 47 jeweils einen Zuschnitt 64c bzw. 64b. Im Zustand der Fig. 6 hat der Spannrahmen das Formteil 66 auf die Oberseite 50 der Beschickungseinheit 45 fallengelassen oder darauf abgelegt, während im Wesentlichen zeitgleich der an dem zweiten Abschnitt 47 zuvor von der Tischeinrichtung 31 aufgenommene Zuschnitt 64b für den nächsten Formvorgang in dem Arbeitsbereich 55 abgelegt wird.

Während der weiteren Produktion aufeinanderfolgender Formteile 66 werden die Takte oder Verfahrensschritte, die in Fig. 5 und 6 dargestellt sind, abwechselnd wiederholt, wodurch mittels der Beschickungseinheit 45 sukzessive Zuschnitte 64 des Ausgangsmaterials 6 in den Arbeitsbereich 55 hineintransportiert und fertige Formteile 66 aus diesem heraustransportiert werden. Die fertigen Formteile 66 können beispielsweise in der in Fig. 5 gezeigten Position der Beschickungseinheit 45 aus der Beschickungsvorrichtung 15 entnommen werden. Eine Vielzahl von Formteilen 66 wird auf diese Weise gefertigt.

Es wird ersichtlich, dass die Beschickungseinheit 45 somit zwei "Stationen" aufweist, die durch die ersten und zweiten Abschnitte 46, 47 gebildet sind und jeweils zur Aufnahme eines der Zuschnitte 64a, 64b, 64c, ... dienen.

Vorstehend wurde bereits beschrieben, dass der Tisch 36 in Verfahrrichtung 37 im Wesentlichen parallel zur vertikalen Richtung V und somit quer zu den horizontalen Bewegungsrichtungen R1, R2 der Beschickungseinheit 45 verfahrbar ist. Insbesondere kann der Tisch 36 getaktet verfahrbar sein.

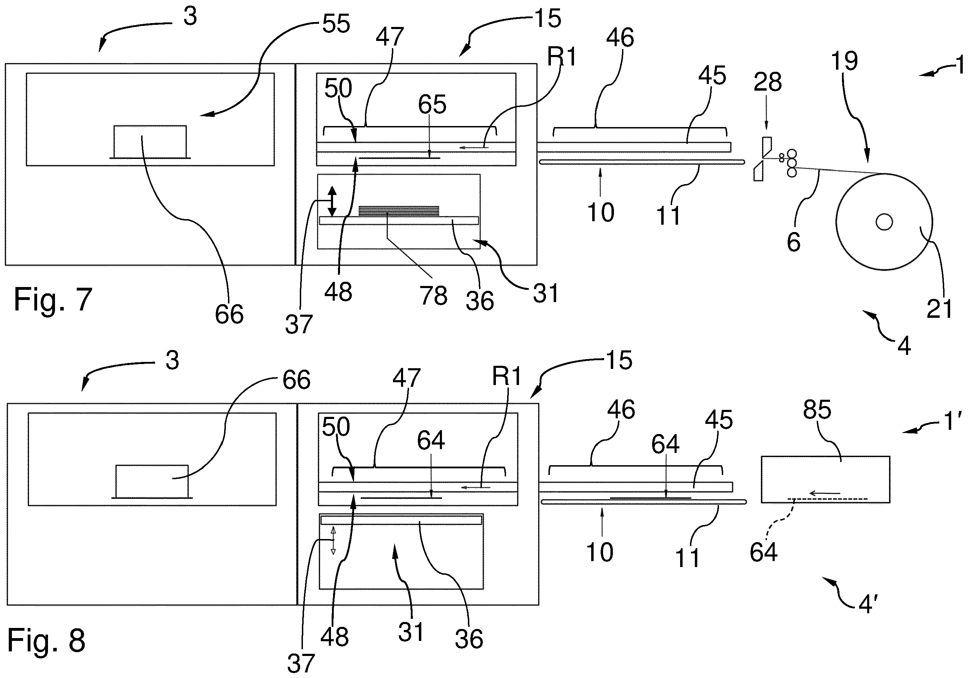

Fig. 7 illustriert, dass in einer anderen, gegenüber jener der Fig. 1-6 modifizierten Betriebsart der Anordnungen 1, 4 ein Stapel 78 einer Vielzahl von Materialzuschnitten eines Ausgangsmaterials, etwa ein Plattenstapel, auf dem Tisch 36 angeordnet ist. In dieser Betriebsart werden die als Plattenstapel 78 bereitgestellten Zuschnitte durch Thermoformen zur Bildung der Formteile 66 verarbeitet.

Die Abrolleinrichtung 19 wird in der beispielhaften Betriebsart der Fig. 7 nicht benutzt. Auch die Trenneinrichtung 28 wird in dieser Betriebsart nicht betätigt. An dem ersten Abschnitt 46 werden in der Betriebsart der Fig. 7 keine Zuschnitte 64 aufgenommen. Stattdessen werden sukzessive einzelne Zuschnitte 65 jeweils vom oberen Ende des Stapels 78 an dem zweiten Abschnitt 47 aufgenommen, danach der zweite Abschnitt 47 durch Bewegen der Beschickungseinheit 45 in Richtung R1 in den Arbeitsbereich 55 hinein verlagert, um den Zuschnitt 65, der zuvor an dem zweiten Abschnitt 47 vom Stapel 78 aufgenommen wurde, in dem Arbeitsbereich 55 abzulegen, und um zugleich auf der Oberseite 50 der Beschickungseinheit 45 das fertige Formteil 66 des vorangehenden Arbeitszyklus entgegenzunehmen.

Der Tisch 36 kann bei der Betriebsart der Fig. 7 taktweise nach oben verfahren werden. Wenngleich der Stapel 78 in Fig. 7 als direkt auf dem Tisch 36 aufgelegt gezeigt ist, ist es denkbar, den Stapel 78 auf einer geeigneten Palette (in den Fig. nicht gezeigt) anzuordnen und die Palette dann auf dem Tisch 36 zu platzieren, bevor der Betrieb der Anordnung 1 gestartet wird. Die zusätzliche Höhe der Palette wird zum Beispiel dann beim Verfahren des Tisches 36 berücksichtigt.

Zudem versteht es sich, dass bei der Betriebsart der Fig. 1-6 auf dem Tisch 36 ein Zuschnitt 64 entweder direkt im Wesentlichen horizontal abgelegt werden kann, um dann von dem Tisch 36 im nächsten Schritt wieder aufgenommen zu werden, oder dass auf dem Tisch 36 bei Bedarf ein Zwischenelement angeordnet sein kann, welches dann vorzugsweise am Tisch 36 fixiert ist und auf dem der Zuschnitt 64 horizontal abgelegt wird. Ein derartiges Zwischenelement kann dann als Teil der Tischeinrichtung 31 angesehen werden.

Eine derartige Anordnung 1 mit dem vertikal verfahrbaren Tisch 36 ermöglicht vorteilhaft einen Betrieb in mehreren Betriebsarten - unter Zuführen des Ausgangsmaterials 6 als Halbzeug von der Rolle 21 und sukzessivem Zuschneiden der Zuschnitte 64, oder alternativ unter Zuführen von Zuschnitten durch Aufnehmen dieser von einem zuvor bereitgestellten Stapel 78 aus Platten- oder Folienzuschnitten. Die Anordnung 1 ist also sehr flexibel einsetzbar.

In Varianten der Anordnung 1, wie sie vorstehend in Bezug auf die Fig. 1-6 beschrieben ist, ist es denkbar, dass der Tisch 36 der Tischvorrichtung 31 feststehend ausgebildet ist, ohne die Möglichkeit einer vertikalen Verfahrbarkeit. Der Aufbau der Beschickungsvorrichtung 15 kann auf diese Weise vereinfacht werden.

Bei der Anordnung 1 können in den verschiedenen Betriebsarten sowohl der Zuschnitt 64a, 64b, 64c, ... als auch das Formteil 66, beim Zuführen bzw. beim Herausnehmen aus der Thermoformmaschine 3, in analoger und somit einheitlicher Weise behandelt werden, unabhängig davon, ob Plattenware oder Rollenware als Ausgangsmaterial benutzt wird. Zudem kann eine Beeeinträchtigung der realisierbaren Ziehtiefe, sowohl in positiver als auch in negativer Richtung, gerechnet von der Ebene E aus, durch die Transportvorgänge mit der Anordnung 4, wie vorstehend beschrieben, vermieden werden.

Vorteilhaft kann bei der Anordnung 1 der Fig. 1-7 Rollenware verwendet werden, falls das gewünschte Ausgangsmaterial 6 als Rollenware verfügbar ist. Falls das Ausgangsmaterial 6 z. B. zu stark ist, um auf einer Rolle geliefert zu werden, kann alternativ vom Plattenstapel 78 gearbeitet werden. Somit ermöglicht die Anordnung 1 die Nutzung des Preisvorteils der Rollenware bei gleichzeitiger Flexibilität.

Zudem entstehen bei der unter Bezugnahme auf Fig. 1-7 beschriebenen Art und Weise, die Zuschnitte zuzuführen und das Formteil zu transportieren, keine durch den Transportmechanismus bedingten Materialpartikel oder -splitter. Dies trägt dazu bei, hochwertige Formteile mit nur geringem Ausschuss produzieren zu können.

Eine Anordnung 1' gemäß einem weiteren Ausführungsbeispiel zeigt Fig. 8.

Aufbau und Betrieb der Anordnung 1' sind mit Ausnahme der im Folgenden beschriebenen Unterschiede dem zu Fig. 1-7 Beschriebenen analog. Hierbei ist wiederum eine Betriebsart möglich, in der Zuschnitte 64a, 64b, 64c, ... auf der Ablageeinrichtung 10 automatisiert und sukzessive bereitgestellt werden. Ferner ist auch eine Betriebsart, bei der analog Fig. 7 eine Verarbeitung von Ausgangsmaterial ausgehend von einem Stapel 78 erfolgt, möglich.

Im Unterschied zu den Fig. 1-7 jedoch weist die Anordnung 4' der Anordnung 1' weder die Abrolleinrichtung 19 noch die Trenneinrichtung 28 auf. Stattdessen kann gemäß Fig. 8 eine weitere Arbeitsstation 85 der Ablageeinrichtung 10 vorgelagert sein, wobei die Arbeitsstation 85 jedoch nicht zwingend erforderlich ist. Einzelne Platten- oder Folienzuschnitte 64 einer Plattenware, insbesondere gebildet mit einem thermoplastischen Kunststoff, werden nacheinander sukzessive aus einer externen Quelle bereitgestellt, durchlaufen bei dem gezeigten Beispiel in Fig. 8 die Arbeitsstation 85, bei der es sich beispielsweise um eine Reinigungseinrichtung handeln kann, und gelangen dann auf die Ablageeinrichtung 10. Die Ablageeinrichtung 10 ist wiederum beispielhaft mit einer bandartigen Transporteinrichtung 11 ausgestattet. Die weitere Verarbeitung der Zuschnitte 64 erfolgt analog dem zu den Fig. 1-6 beschriebenen Betrieb. Wird die Anordnung 1' im Betriebsmodus der Fig. 7 betrieben, kann vorgesehen sein, dass die Arbeitsstation 85, falls vorhanden, abgeschaltet oder in einen Ruhezustand versetzt ist und von der externen Quelle keine Zuschnitte 64 zu der Ablageeinrichtung 10 gefördert werden.

Erwähnt sei auch, dass eine Arbeitsstation 85 auch in einer beispielhaften Variante des Ausführungsbeispiels der Fig. 1-7 noch zwischen der Trenneinrichtung 28 und der Ablageeinrichtung 10 zusätzlich vorgesehen sein könnte, falls erforderlich.

Wenngleich im Vorstehenden die Anlageeinrichtungen 10 vorzugsweise als mit einer Transporteinrichtung 11 ausgebildet beschrieben sind, versteht es sich, dass in Varianten der vorstehenden Ausführungsbeispiele die Ablageeinrichtung 10 jeweils als ein Tisch mit einer im Betrieb nicht für ein Bewegen vorgesehenen Ablageoberfläche ausgebildet sein kann.

### Bezugszeichenliste

- 1, 1': Anordnung zum Thermoformen
- 3: Thermoformmaschine
- 4, 4': Anordnung zum Zuführen eines Halbzeugs
- 6: Ausgangsmaterial
- 10: Ablageeinrichtung
- 11: Transporteinrichtung
- 15: Beschickungsvorrichtung
- 19: Abrolleinrichtung
- 21: Rolle
- 28: Trenneinrichtung
- 31: Tischeinrichtung
- 36: Tisch
- 37: Verfahrrichtung (Tisch)
- 45: Beschickungseinheit
- 46: erster Abschnitt
- 47: zweite Abschnitt
- 48: Unterseite (Beschickungseinheit)
- 49: Aufnahmemittel
- 50: Oberseite (Beschickungseinheit)
- 55: Arbeitsbereich (Thermoformmaschine)
- 64: Zuschnitt
- 64a-c: Zuschnitt
- 65: Zuschnitt
- 66: Formteil
- 78: Stapel
- 85: Arbeitsstation
- B: Boden
- E: Einlegeebene
- H: horizontale Richtung
- V: vertikale Richtung
- R1: erste Bewegungsrichtung (Beschickungseinheit)
- R2: zweite Bewegungsrichtung (Beschickungseinheit)

## Patentansprüche

1. Anordnung (4; 4') zum Zuführen eines Halbzeugs als Ausgangsmaterial (6) für ein Thermoformen zu einer Thermoformmaschine (3),
wobei die Anordnung (4; 4') eine Ablageeinrichtung (10), auf der Zuschnitte (64a-c; 64) des Ausgangsmaterials (6) jeweils bereitstellbar sind, und eine Beschickungsvorrichtung (15), aufweisend eine Tischeinrichtung (31) und eine bewegbare Beschickungseinheit (45), aufweist;
wobei die Beschickungseinheit (45) einen ersten Abschnitt (46) und einen zweiten Abschnitt (47) aufweist und der erste und zweite Abschnitt (46, 47) jeweils für ein Aufnehmen eines der Zuschnitte (64a-c; 64) an dem Abschnitt (46, 47) eingerichtet sind, und wobei auf der Tischeinrichtung (31) mindestens einer der Zuschnitte (64a-c; 64) ablegbar ist;
wobei der erste Abschnitt (46) zum Aufnehmen eines der Zuschnitte (64a-c; 64) von der Ablageeinrichtung (10) und der zweite Abschnitt (47) zum Aufnehmen eines anderen der Zuschnitte (64a-c; 64) von der Tischeinrichtung (31) positionierbar sind und danach der erste Abschnitt (46) zum Ablegen des einen von der Ablageeinrichtung (10) aufgenommenen Zuschnitts (64a-c; 64) auf der Tischeinrichtung (31) und der zweite Abschnitt (47) zum Ablegen des anderen von der Tischeinrichtung (31) aufgenommenen Zuschnitts (64a-c; 64) in einem Arbeitsbereich (55) der Thermoformmaschine (3) positionierbar sind.

2. Anordnung nach Anspruch 1,
**dadurch gekennzeichnet, dass** die Anordnung (4) eine der Ablageeinrichtung (10) vorgelagert angeordnete Abrolleinrichtung (19) zum Abrollen einer Rollenware aufweist.

3. Anordnung nach Anspruch 2,
**dadurch gekennzeichnet, dass** die Anordnung (4) eine Trenneinrichtung (28), insbesondere eine Schneideinrichtung, aufweist, die für ein Abtrennen eines Stücks der mittels der Abrolleinrichtung (19) bereichsweise abgerollten und insbesondere zumindest bereichsweise auf der Ablageeinrichtung (10) abgelegten Rollenware zum Bilden der Zuschnitte (64a-c) des Ausgangsmaterials (6) eingerichtet ist.

4. Anordnung nach einem der vorstehenden Ansprüche,
**dadurch gekennzeichnet, dass** die Anordnung (4') für ein Bereitstellen der Zuschnitte (64) des Ausgangsmaterials (6) auf der Ablageeinrichtung (10) jeweils als Zuschnitt einer Plattenware eingerichtet ist.

5. Anordnung nach einem der vorstehenden Ansprüche,
**dadurch gekennzeichnet, dass** die Beschickungseinheit (45) derart bewegbar angeordnet ist, dass in einer ersten Position der Beschickungseinheit (45) der erste Abschnitt (46) der Beschickungseinheit (45) zum Aufnehmen des einen (64b) der Zuschnitte (64a-c; 64) von der Ablageeinrichtung (10) und gleichzeitig der zweite Abschnitt (47) der Beschickungseinheit (45) zum Aufnehmen des anderen (64a) der Zuschnitte (64a-c; 64) von der Tischeinrichtung (31) positioniert sind; und/oder dass die Beschickungseinheit (45) derart bewegbar angeordnet ist, dass in einer zweiten Position der Beschickungseinheit (45) der erste Abschnitt (46) der Beschickungseinheit (45) zum Ablegen des einen Zuschnitts (64b) auf der Tischeinrichtung (31) und gleichzeitig der zweite Abschnitt (47) der Beschickungseinheit (45) zum Ablegen des anderen Zuschnitts (64a) in dem Arbeitsbereich (55) der Thermoformmaschine (3) positioniert sind.

6. Anordnung nach einem der vorstehenden Ansprüche,
**dadurch gekennzeichnet, dass** die Beschickungseinheit (45) als ein bewegbarer Beschickungswagen ausgebildet ist.

7. Anordnung nach einem der vorstehenden Ansprüche,
**dadurch gekennzeichnet, dass** die bewegbare Beschickungseinheit (45) oberhalb der Tischeinrichtung (31) und der Ablageeinrichtung (10), vorzugsweise entlang einer im Wesentlichen horizontalen Richtung (H), verfahrbar ist.

8. Anordnung nach einem der vorstehenden Ansprüche,
**dadurch gekennzeichnet, dass** der erste und der zweite Abschnitt (46, 47) der Beschickungseinheit (45) entlang einer Bewegungsrichtung (R1, R2) der Beschickungseinheit (45) hintereinander angeordnet sind.

9. Anordnung nach einem der vorstehenden Ansprüche,
**dadurch gekennzeichnet, dass** die Zuschnitte (64a-c; 64) an dem ersten und dem zweiten Abschnitt (46, 47) der Beschickungseinheit (45) jeweils an einer Unterseite (48) der Beschickungseinheit (45) aufnehmbar sind und dass hierfür die Beschickungseinheit (45), insbesondere im Bereich der Unterseite (48) derselben, mit Aufnahmemitteln (49) ausgestattet ist.

10. Anordnung nach einem der vorstehenden Ansprüche,
**dadurch gekennzeichnet, dass** die Beschickungsvorrichtung (15) derart ausgebildet und angeordnet ist, dass der zweite Abschnitt (47) der bewegbaren Beschickungseinheit (45) in den Arbeitsbereich (55) der Thermoformmaschine (3) hinein verlagerbar ist.

11. Anordnung nach einem der vorstehenden Ansprüche,
**dadurch gekennzeichnet, dass** die Beschickungsvorrichtung (15) derart ausgebildet ist, dass auf einer Oberseite (50) der Beschickungseinheit (45) ein aus einem zuvor in dem Arbeitsbereich (55) der Thermoformmaschine (3) abgelegten Zuschnitt (64a-c; 64) mittels Thermoformen hergestelltes und danach entformtes Formteil (66) ablegbar ist, insbesondere in jener Position der Beschickungseinheit (45), in der die Beschickungseinheit (45) für das Ablegen des anderen Zuschnitts (64a-c; 64) in dem Arbeitsbereich (55) der Thermoformmaschine (3) positioniert ist.

12. Anordnung nach einem der vorstehenden Ansprüche,
**dadurch gekennzeichnet, dass** die Ablageeinrichtung (10) mit einer Transporteinrichtung (11), beispielsweise einer bandartigen Transporteinrichtung (11), ausgebildet ist.

13. Anordnung nach einem der vorstehenden Ansprüche,
**dadurch gekennzeichnet, dass** die Tischeinrichtung (31) der Beschickungsvorrichtung (15) mit einem bewegbaren, insbesondere im Wesentlichen entlang einer vertikalen Richtung (V) verfahrbaren, Tisch (36) ausgebildet ist.

14. Anordnung (1; 1') zum Thermoformen mit einer Thermoformmaschine (3), sowie mit einer Anordnung (4; 4') gemäß einem der vorstehenden Ansprüche, um der Thermoformmaschine (3) ein Halbzeug als Ausgangsmaterial (6) für das Thermoformen zuzuführen.

15. Verfahren zum Zuführen eines Halbzeugs als Ausgangsmaterial (6) für ein Thermoformen zu einer Thermoformmaschine (3), umfassend:
Bereitstellen eines Zuschnitts (64a; 64) des Ausgangsmaterials (6) auf einer Ablageeinrichtung (10);
Aufnehmen des auf der Ablageeinrichtung (10) bereitgestellten Zuschnitts (64a; 64) von dieser durch einen ersten Abschnitt (46) einer bewegbaren Beschickungseinheit (45) einer Beschickungsvorrichtung (15);
Bewegen der Beschickungseinheit (45) in einer ersten Richtung (R1);
Ablegen des an dem ersten Abschnitt (46) von der Ablageeinrichtung (10) aufgenommenen Zuschnitts (64a; 64) auf einer Tischeinrichtung (31) der Beschickungsvorrichtung (15);
Bewegen der Beschickungseinheit (45) in einer zweiten Richtung (R2);
Aufnehmen des auf der Tischeinrichtung (31) abgelegten Zuschnitts (64a; 64) von der Tischeinrichtung (31) durch einen zweiten Abschnitt (47) der Beschickungseinheit (45);
erneutes Bewegen der Beschickungseinheit (45) in der ersten Richtung (R1);
Ablegen des an dem zweiten Abschnitt (47) von der Tischeinrichtung (31) aufgenommenen Zuschnitts (64a; 64) in einem Arbeitsbereich (55) der Thermoformmaschine (3).

16. Verfahren nach Anspruch 15,
**dadurch gekennzeichnet, dass** während des Aufnehmens des auf der Tischeinrichtung (31) abgelegten Zuschnitts (64a; 64) durch den zweiten Abschnitt (47) der Beschickungseinheit (45) ein weiterer auf der Ablageeinrichtung (10) bereitgestellter Zuschnitt (64b; 64) durch den ersten Abschnitt (46) der Beschickungseinheit (45) aufgenommen wird, und vorzugsweise dass während des Ablegens des an dem zweiten Abschnitt (47) aufgenommenen Zuschnitts (64a; 64) in dem Arbeitsbereich (55) der Thermoformmaschine (3) der weitere an dem ersten Abschnitt (46) aufgenommene Zuschnitt (64b; 64) auf der Tischeinrichtung (31) abgelegt wird.

17. Verfahren nach einem der Ansprüche 15 oder 16,
**dadurch gekennzeichnet, dass** zum Bereitstellen des Zuschnitts (64a-c) des Ausgangsmaterials (6) auf der Ablageeinrichtung (10) ein Stück eines als Rollenware bereitgestellten Ausgangsmaterials (6) abgerollt, insbesondere auf der Ablageeinrichtung (10) zumindest abschnittsweise abgelegt, und zum Bilden des Zuschnitts (64a-c) von der verbleibenden Rollenware abgetrennt wird.

18. Verfahren nach einem der Ansprüche 15 oder 16,
**dadurch gekennzeichnet, dass** der Zuschnitt (64) des Ausgangsmaterials (6) auf der Ablageeinrichtung (10) als Zuschnitt einer Plattenware bereitgestellt wird.

## Claims

1. Arrangement (4; 4') for feeding a semi-finished product as a starting material (6) for thermoforming to a thermoforming machine (3),
wherein the arrangement (4; 4') has a deposition device (10), on which blanks (64a-c; 64) of the starting material (6) can each be provided, and a loading device (15), having a table device (31) and a movable loading unit (45); wherein the loading unit (45) has a first portion (46) and a second portion (47), and the first and second portion (46, 47) are each set up for receiving one of the blanks (64a-c; 64) on the portion (46, 47), and wherein at least one of the blanks (64a-c; 64) can be deposited on the table device (31);
wherein the first portion (46) is positionable for receiving one of the blanks (64a-c; 64) from the deposition device (10) and the second portion (47) is positionable for receiving another of the blanks (64a-c; 64) from the table device (31), and subsequently the first portion (46) is positionable for depositing one blank (64a-c; 64) received from the deposition device (10) on the table device (31) and the second portion (47) is positionable for depositing the other blank (64a-c; 64) received from the table device (31) in a work region (55) of the thermoforming machine (3) .

2. Arrangement according to claim 1,
**characterised in that** the arrangement (4) has an unrolling device (19), arranged upstream from the deposition device (10), for unrolling a rolled material.

3. Arrangement according to claim 2,
**characterised in that** the arrangement (4) has a separating device (28), in particular a cutting device, set up for separating off a piece of the rolled material, which has been unrolled in regions by the unrolling device (19) and in particular deposited at least in regions on the deposition device (10), to form the blanks (64a-c) of the starting material (6).

4. Arrangement according to any of the preceding claims, **characterised in that** the arrangement (4') is set up for providing the blanks (64) of the starting material (6) on the deposition device (10), each as a blank of a plate material.

5. Arrangement according to any of the preceding claims, **characterised in that** the loading unit (45) is arranged movably in such a way that, in a first position of the loading unit (45), the first portion (46) of the loading unit (45) is positioned for receiving one (64b) of the blanks (64a-c; 64) from the deposition device (10) and simultaneously the second portion (47) of the loading unit (45) is positioned for receiving the other (64a) of the blanks (64a-c; 64) from the table device (31); and/or **in that** the loading unit (45) is arranged movably in such a way that, in a second position of the loading unit (45), the first portion (46) of the loading unit (45) is positioned for depositing one blank (64b) on the table device (31) and simultaneously the second portion (47) of the loading unit (45) is positioned for depositing the other blank (64a) in the working region (55) of the thermoforming machine (3).

6. Arrangement according to any of the preceding claims, **characterised in that** the loading unit (45) is configured as a movable loading carriage.

7. Arrangement according to any of the preceding claims, **characterised in that** the movable loading unit (45) is displaceable above the table device (31) and the deposition device (10), preferably along a substantially horizontal direction (H).

8. Arrangement according to any of the preceding claims, **characterised in that** the first and second portion (46, 47) of the loading unit (45) are arranged in succession along a movement direction (R1, R2) of the loading unit (45).

9. Arrangement according to any of the preceding claims, **characterised in that** the blanks (64a-c; 64) can be received on the first and the second portion (46, 47) of the loading unit (45), in each case on a lower face (48) of the loading unit (45), and **in that**, for this purpose, the loading unit (45) is equipped with receiving means (49), in particular in the region of the underside (48) thereof.

10. Arrangement according to any of the preceding claims, **characterised in that** the loading device (15) is configured and arranged in such a way that the second portion (47) of the movable loading unit (45) is displaceable into the working region (55) of the thermoforming machine (3).

11. Arrangement according to any of the preceding claims, **characterised in that** the loading device (15) is configured in such a way that a moulded part (66), which is produced by thermoforming from a blank (64a-c; 64) previously deposited in the working region (55) of the thermoforming machine (3) and which is subsequently demoulded, can be deposited on an upper face (50) of the loading unit (45), in particular in the position of the loading unit (45) in which the loading unit (45) is positioned for depositing the other blank (64a-c; 64) in the working region (55) of the thermoforming machine (3).

12. Arrangement according to any of the preceding claims, **characterised in that** the deposition device (10) is configured with a transport device (11), for example a belt-like transport device (11).

13. Arrangement according to any of the preceding claims, **characterised in that** the table device (31) of the loading device (15) is configured with a table (36) which is movable, in particular displaceable substantially along a vertical direction (V).

14. Arrangement (1; 1') for thermoforming comprising a thermoforming machine (3) and comprising an arrangement (4; 4') according to any of the preceding claims so as to feed a semi-finished product as a starting material (6) for the thermoforming to the thermoforming machine (3).

15. Method for feeding a semi-finished product as a starting material (6) for thermoforming to a thermoforming machine (3), comprising:
providing a blank (64a; 64) of the starting material (6) on a deposition device (10);
receiving the blank (64a; 64) provided on the deposition device (10) from said device by way of a first portion (46) of a movable loading unit (45) of a loading device (15);
moving the loading unit (45) in a first direction (R1);
depositing the blank (64a; 64), received on the first portion (46) from the deposition device (10), on a table device (31) of the loading device (15);
moving the loading unit (45) in a second direction (R2);
receiving the blank (64a; 64), deposited on the table device (31), from the table device (31) by way of a second portion (47) of the loading unit (45);
moving the loading unit (45) in the first direction (R1) again;
depositing the blank (64a; 64), received on the second portion (47) from the table device (31), in a working region (55) of the thermoforming machine (3).

16. Method according to claim 15,
**characterised in that**, while the blank (64; 64), deposited on the table device (31), is being received by the second portion (47) of the loading unit (45), a further blank (64b; 64) provided on the deposition device (10) is received by the first portion (46) of the loading unit (45), and preferably **in that**, while the blank (64a; 64), received on the second portion (47), is being deposited in the working region (55) of the thermoforming machine (3), the further blank (64b; 64), received on the first portion (46), is deposited on the table device (31).

17. Method according to either claim 15 or claim 16, **characterised in that**, for providing the blank (64a-c) of the starting material (6) on the deposition device (10), a piece of a starting material (6), provided as rolled material, is unrolled, in particular deposited on the deposition device (10) at least in portions, and separated off from the remaining rolled material to form the blank (64a-c) .

18. Method according to either claim 15 or claim 16, **characterised in that** the blank (64) of the starting material (6) is provided on the deposition device (10) as a blank of a plate material.

## Revendications

1. Agencement (4 ; 4') pour amener un semi-produit comme matériau de départ (6) pour un thermoformage à une machine de thermoformage (3),
dans lequel l'agencement (4 ; 4') présente un dispositif de dépôt (10) sur lequel des découpes (64a-c ; 64) du matériau de départ (6) peuvent être respectivement mises à disposition, et un système de chargement (15), présentant un dispositif de table (31) et une unité de chargement mobile (45) ;
dans lequel l'unité de chargement (45) présente une première section (46) et une deuxième section (47) et la première et la deuxième section (46, 47) sont respectivement conçues pour prendre en charge une des découpes (64a-c ; 64) sur la section (46, 47), et dans lequel au moins une des découpes (64a-c ; 64) peut être déposée sur le dispositif de table (31) ;
dans lequel la première section (46) peut être positionnée pour prendre en charge une des découpes (64a-c ; 64) à partir du dispositif de dépôt (10) et la deuxième section (47) être positionnée pour prendre en charge une autre des découpes (64a-c ; 64) à partir du dispositif de table (31) et ensuite la première section (46) peut être positionnée pour déposer ladite une découpe (64a-c ; 64) prise en charge à partir du dispositif de dépôt (10) sur le dispositif de table (31) et la deuxième section (47) être positionnée pour déposer ladite autre découpe (64a-c ; 64) prise en charge à partir du dispositif de table (31) dans une zone de travail (55) de la machine de thermoformage (3).

2. Agencement selon la revendication 1,
**caractérisé en ce que** l'agencement (4) présente un dispositif de déroulement (19) disposé en amont du dispositif de dépôt (10) pour dérouler un produit en rouleau.

3. Agencement selon la revendication 2,
**caractérisé en ce que** l'agencement (4) présente un dispositif de séparation (28), en particulier un dispositif de coupe, qui est conçu pour séparer un morceau du produit en rouleau déroulé au moins sur certaines parties au moyen du dispositif de déroulement (19) et en particulier déposé au moins sur certaines parties sur le dispositif de dépôt (10) pour former les découpes (64a-c) du matériau de départ (6) .

4. Agencement selon l'une des revendications précédentes, **caractérisé en ce que** l'agencement (4') est conçu pour mettre à disposition les découpes (64) du matériau de départ (6) sur le dispositif de dépôt (10), chacune sous forme de découpe d'un produit en plaque.

5. Agencement selon l'une des revendications précédentes, **caractérisé en ce que** l'unité de chargement (45) est disposée de manière mobile de telle sorte que, dans une première position de l'unité de chargement (45), la première section (46) de l'unité de chargement (45) soit positionnée pour prendre en charge ladite une (64b) des découpes (64a-c ; 64) à partir du dispositif de dépôt (10) et, simultanément, la deuxième section (47) de l'unité de chargement (45) positionnée pour prendre en charge ladite autre (64a) des découpes (64a-c ; 64) à partir du dispositif de table (31) ; et/ou **en ce que** l'unité de chargement (45) est disposée de manière mobile de telle sorte que, dans une deuxième position de l'unité de chargement (45), la première section (46) de l'unité de chargement (45) soit positionnée pour déposer ladite une découpe (64b) sur le dispositif de table (31) et, simultanément, la deuxième section (47) de l'unité de chargement (45) positionnée pour déposer ladite autre découpe (64a) dans la zone de travail (55) de la machine de thermoformage (3).

6. Agencement selon l'une des revendications précédentes, **caractérisé en ce que** l'unité de chargement (45) est réalisée sous la forme d'un chariot de chargement mobile.

7. Agencement selon l'une des revendications précédentes, **caractérisé en ce que** l'unité de chargement mobile (45) est déplaçable au-dessus du dispositif de table (31) et du dispositif de dépôt (10), de préférence le long d'une direction sensiblement horizontale (H).

8. Agencement selon l'une des revendications précédentes, **caractérisé en ce que** la première et la deuxième section (46, 47) de l'unité de chargement (45) sont disposées l'une derrière l'autre le long d'une direction de déplacement (R1, R2) de l'unité de chargement (45).

9. Agencement selon l'une des revendications précédentes, **caractérisé en ce que** les découpes (64a-c ; 64) peuvent être prises en charge sur la première et la deuxième section (46, 47) de l'unité de chargement (45) respectivement sur une face inférieure (48) de l'unité de chargement (45) et **en ce que**, à cet effet, l'unité de chargement (45) est équipée de moyens de préhension (49), en particulier dans la zone de sa face inférieure (48).

10. Agencement selon l'une des revendications précédentes, **caractérisé en ce que** le système de chargement (15) est conçu et disposé de telle sorte que la deuxième section (47) de l'unité de chargement mobile (45) soit déplaçable dans la zone de travail (55) de la machine de thermoformage (3) .

11. Agencement selon l'une des revendications précédentes, **caractérisé en ce que** le système de chargement (15) est conçu de telle sorte que, sur une face supérieure (50) de l'unité de chargement (45), une pièce moulée (66) préalablement fabriquée par thermoformage à partir d'une découpe (64a-c ; 64) dans la zone de travail (55) de la machine de thermoformage (3) et ensuite démoulée, peut être déposée, en particulier dans la position de l'unité de chargement (45) dans laquelle l'unité de chargement (45) est positionnée pour le dépôt de ladite autre découpe (64a-c ; 64) dans la zone de travail (55) de la machine de thermoformage (3).

12. Agencement selon l'une des revendications précédentes, **caractérisé en ce que** le dispositif de dépôt (10) est réalisé avec un dispositif de transport (11), par exemple un dispositif de transport de type bande (11).

13. Agencement selon l'une des revendications précédentes, **caractérisé en ce que** le dispositif de table (31) du système de chargement (15) est réalisé avec une table (36) mobile, en particulier déplaçable sensiblement le long d'une direction verticale (V).

14. Agencement (1 ; 1') pour le thermoformage avec une machine de thermoformage (3), ainsi qu'avec un agencement (4 ; 4') selon l'une des revendications précédentes, pour amener à la machine de thermoformage (3) un semi-produit comme matériau de départ (6) pour le thermoformage.

15. Procédé pour amener un semi-produit comme matériau de départ (6) pour un thermoformage à une machine de thermoformage (3), consistant à :
mettre à disposition une découpe (64a ; 64) du matériau de départ (6) sur un dispositif de dépôt (10) ;
prendre en charge la découpe (64a ; 64) mise à disposition sur le dispositif de dépôt (10) à partir de celui-ci par une première section (46) d'une unité de chargement mobile (45) d'un système de chargement (15) ;
déplacer l'unité de chargement (45) dans une première direction (R1) ;
déposer la découpe (64a ; 64) prise en charge sur la première section (46) à partir du dispositif de dépôt (10) sur un dispositif de table (31) du système de chargement (15) ;
déplacer l'unité de chargement (45) dans une deuxième direction (R2) ;
prendre en charge la découpe (64a ; 64) déposée sur le dispositif de table (31) à partir du dispositif de table (31) par une deuxième section (47) de l'unité de chargement (45) ;
déplacer à nouveau l'unité de chargement (45) dans la première direction (R1) ;
déposer la découpe (64a ; 64) prise en charge sur la deuxième section (47) à partir du dispositif de table (31) dans une zone de travail (55) de la machine de thermoformage (3) .

16. Procédé selon la revendication 15,
**caractérisé en ce que**, pendant la prise en charge de la découpe (64a ; 64) déposée sur le dispositif de table (31) par la deuxième section (47) de l'unité de chargement (45), une autre découpe (64b ; 64) mise à disposition sur le dispositif de dépôt (10) est prise en charge par la première section (46) de l'unité de chargement (45), et de préférence **en ce que**, pendant la dépose de la découpe (64a ; 64) prise en charge sur la deuxième section (47) dans la zone de travail (55) de la machine de thermoformage (3), l'autre découpe (64b ; 64) prise en charge sur la première section (46) est déposée sur le dispositif de table (31).

17. Procédé selon l'une des revendications 15 ou 16, **caractérisé en ce que**, pour mettre à disposition la découpe (64a-c) du matériau de départ (6) sur le dispositif de dépôt (10), un morceau d'un matériau de départ (6) mis à disposition sous forme de produit en rouleau est déroulé, en particulier déposé au moins par sections sur le dispositif de dépôt (10) et séparé du produit en rouleau restant pour former la découpe (64a-c).

18. Procédé selon l'une des revendications 15 ou 16, **caractérisé en ce que** la découpe (64) du matériau de départ (6) est mise à disposition sur le dispositif de dépôt (10) sous forme de découpe d'un produit en plaque.
